# EUROPÄISCHE PATENTANMELDUNG

(11) **EP 4 169 877 A1**
(43) Veröffentlichungstag der Anmeldung: **26.04.2023**
(21) Anmeldenummer: 22189929.7
(22) Anmeldetag: 11.08.2022
(51) Int. Cl.: C01B 21/04, B23K 26/70, B01D 53/047, B23K 26/38

(54) **VERFAHREN ZUR VOR ORT HERSTELLUNG VON HÖCHST REINEM STICKSTOFF UND DESSEN VERWENDUNG, INSBESONDERE FÜR LASERSCHNEIDANWENDUNGEN**

(30) Priorität: 25.10.2021 DE 102021127636
(71) Anmelder: AIRCO Systems GmbH, 56933 Frankfurt (DE)
(72) Erfinder: Sell, Carsten, 61250 Usingen (DE); Schröder, Thorsten, 65439 Flörsheim-Wicker (DE)
(74) Vertreter: Fuchs Patentanwälte Partnerschaft mbB

(57) **Zusammenfassung**

Verfahren zur Herstellung von verdichtetem reinen Stickstoff mittels eines Stickstoffgenerators, bei welchem man
a) mittels PSA-Technologie Stickstoff aus Druckluft erzeugt;
b) den in a) erzeugten Stickstoff mittels eines Verdichtungsmittels umfassend einen Nach- oder Hochdruckverdichter auf einen Druck im Bereich von größer 10 bar bis etwa 400 bar verdichtet; und
c) den gemäß b) verdichteten Stickstoff speichert,
dadurch gekennzeichnet, dass man
in einem Schritt a1) dem Stickstoffgenerator Druckluft unter Einhaltung eines Luftfaktors im Bereich von 2 bis 4 zuführt und den dadurch mit einer Reinheit im Bereich von 2.5 bis 3.5 erzeugten Stickstoff in einem Schritt a2) einer katalytischen Reduktion mit Wasserstoff unterwirft.

Das Verfahren ist effizienter und zugleich wirtschaftlicher als bekannte Verfahren. Derart erzeugter Stickstoff ist von konstant hoher Reinheit (< 1 ppm Sauerstoffgehalt) und wird als Inertgas, zweckmäßig für Laserschneidanwendungen oder in der Lebensmittel- oder Pharmaindustrie eingesetzt.

## Beschreibung

Die vorliegende Erfindung bezieht sich auf die vor Ort Herstellung von Stickstoff. Dies meint die Erzeugung und Bereitstellung von höchst reinem Stickstoff zum Einsatz vor Ort, was allgemein unter dem Begriff "onsite"-Erzeugung bekannt ist. Insbesondere betrifft die Erfindung ein Verfahren zur vor Ort Erzeugung aus Luft und zur Speicherung bis zum Verbrauch von verdichtetem 6.0 oder reinerem, Stickstoff und die Verwendung dieses im Rahmen der Erfindung als höchst rein bezeichneten Stickstoff, insbesondere für Laserschneidanwendungen.

Stickstoff ist das am häufigsten zur Inertisierung in der Industrie eingesetzte Schutzgas. Überall dort, wo Gas zur Inertisierung, Brandvermeidung, Korrosionsvermeidung, zum bleifreien Löten, zur Inertisierung von Tankanlagen, zum Ausblasen von Behältern, beim Rapid Prototyping, für LC-MS Anwendungen, als Reifengas oder als Prozessgas bei lösemittelhaltigen Prozessen benötigt wird, kommt Stickstoff als Inertgas zum Einsatz. Heutzutage kann Stickstoff durch einen Stickstoffgenerator schon bei geringen Bedarfsmengen direkt aus der Umgebungsluft oder Druckluft des Anwenders gewonnen werden.

Stickstoff ist je nach Reinheitsgrad in verschiedenen Qualitäten erhältlich. Die Bezeichnung "3.0 Stickstoff" meint einen maximalen Restgehalt an Sauerstoff von 1000 ppm. Die Bezeichnung "4.0 Stickstoff" bezieht sich auf maximale Restsauerstoffgehalte von 100 ppm, die Bezeichnung "5.0 Stickstoff" auf 10 ppm. Auch Zwischenstufen werden nachgefragt und geliefert, so wie etwa "4.5 Stickstoff", welcher einen zulässigen Gehalt an Restsauerstoff von höchstens ca. 50 ppm aufweist. Höchst reiner Stickstoff, per Definitionem also 6.0 Stickstoff oder auch Stickstoff 6.0 bezeichnet, weist nur noch bis zu 1 ppm an Sauerstoff auf.

Reiner 4.0 bis 4.5 Stickstoff, hochreiner 5.0 Stickstoff und insbesondere höchst reiner 6.0 Stickstoff wird beim Laserschneiden als so genanntes Schneidgas eingesetzt. Weitere Einsatzgebiete umfassen die Anwendungen als Schutzgas in der Lebensmittel- oder Pharmaindustrie zur Begasung und zum Schutz empfindlicher Lebensmittel oder pharmazeutischer Produkte. Zur vor-Ort-Erzeugung von Stickstoff bedient man sich vorzugsweise der an sich bekannten PSA-Technologie. Die Abkürzung "PSA" steht in diesem Zusammenhang für "Pressure Swing Adsorption". Wird der Stickstoffgenerator für Laserschneidanwendungen eingesetzt spricht man auch von der PSAL-Technologie, was nichts anderes bedeutet als PSA-Technologie für Laserschneidanwendungen.

Die PSA-Technologie zur Abtrennung des Sauerstoffs aus Druckluft nutzt dabei das unterschiedliche Adsorptionsverhalten an spezieller Aktivkohle von Sauerstoff und CO₂ einerseits und Stickstoff sowie weiteren inerten Luftbestandteilen, wie Edelgasen, andererseits. Zugleich macht man sich auch die Druckabhängigkeit der Adsorption und Desorption von Sauerstoff an Aktivkohle oder besonderen Molekularsieben zu Nutze. Das so erzeugte saubere, trockene und reine bis hoch reine Stickstoffgas wird nach dem Separationsvorgang verdichtet und dann bis zur Abnahme und zum Verbrauch in verdichtetem oder hoch verdichtetem Zustand in geeigneter Weise zum Beispiel in einer Druckflasche, in einem Drucktank oder in Druckflaschenbündeln bevorratet. Die PSA(L)-Technologie vereint bereits eine Vielzahl von Vorteilen in sich. So sind die Stickstoffkosten niedrig. Es steht ein beliebig großer Stickstoffspeicher zur Verfügung, welcher Verbrauchsspitzen abpuffern kann. Die Speicher (Stickstoffpuffer) lassen sich während etwaiger Produktionsunterbrechungen regenerieren. Die Stickstoffreinheit kann in gewissen Grenzen maßgeschneidert eingestellt werden und nicht zuletzt handelt es sich dabei um eine vergleichsweise energieeffiziente Technologie.

Ein gattungsbildender Stickstoffgenerator sowie ein Verfahren zur vor Ort Herstellung von hoch reinem Stickstoff und dessen Verwendung als Schutzgas zum Beispiel beim Laserschneiden wird in der DE 10 2009 058 054 A1 offenbart.

Diese bezieht sich insbesondere auf ein Verfahren zur Herstellung von verdichtetem reinem, hochreinem oder ultrareinem Stickstoff mittels eines Stickstoffgenerators, bei welchem Verfahren man
a) Stickstoff aus Druckluft erzeugt;
b) den in a) erzeugten Stickstoff mittels eines Verdichtungsmittels umfassend einen Nach- oder Hochdruckverdichter auf einen Druck im Bereich von größer 10 bar bis etwa 400 bar verdichtet; und
c) den gemäß b) verdichteten Stickstoff speichert;
wobei man beim Anfahren oder Einschalten des Verdichtungsmittels oder sobald der Sauerstoffgehalt des in Schritt b) verdichteten Stickstoffs einen vorgegebenen Grenzwert überschreitet, den in Schritt b) des Verfahrens verdichteten Stickstoff für einen bestimmten frei vorwählbaren oder regelbaren Zeitraum ab- oder umleitet, so dass er für den genannten Zeitraum nicht in die Mittel zur Speicherung geleitet wird, wobei der Nach- oder Hochdruckverdichter in dem Zeitraum gespült wird, in dem der verdichtete Stickstoff in einem Kreis geführt oder abgeblasen wird, wobei der im Kreis geführte verdichtete Stickstoffstrom wenigstens ein Filtermaterial und/oder wenigstens einen Abscheider passiert.

Obwohl dieses Verfahren bereits als sehr effizient bezeichnet werden kann, insbesondere bezogen auf das Anfahren der Anlage beispielsweise nach Produktionsunterbrechungen, zeigen sich beim Betrieb dennoch gewisse Nachteile. In erster Linie hat das bekannte Verfahren einen vergleichsweise hohen Druckluftbedarf. Daneben weist der nach dem bekannten Verfahren gewonnene Reinstickstoff für bestimmte Anwendungszwecke noch immer einen relativ hohen Anteil Restsauerstoff im Bereich von ca. 100 ppm bis 10 ppm auf und schließlich kann der Platzbedarf für die zur Durchführung des Verfahrens notwendige Anlage abhängig von den räumlichen Verhältnissen beim Anwender vor Ort als hoch empfunden werden.

Ein wesentlicher Aspekt der PSA-Stickstofferzeugung ist der so genannte "Luftfaktor". Er definiert die Druckluftmenge (Einlassluft in den PSA-Teil der Anlage), die benötigt wird, um eine bestimmte Stickstoffströmung (am Auslass des PSA-Moduls der Anlage) zu erzielen. Der "Luftfaktor" ist somit ein Maß für die Effizienz des Generators, d. h. ein niedrigerer Luftfaktor bedeutet eine höhere Effizienz und zugleich niedrigere Gesamtbetriebskosten. Aus der Praxis weiß man, dass man bei dem obengenannten Verfahren mit einem Luftfaktor im Bereich von 10 bis 12 arbeitet. In diesem Zusammenhang wird im Rahmen der Erfindung unter dem "Luftfaktor" das Verhältnis der Volumina von eingespeister Druckluft zu erzieltem Reinstickstoff(strom) verstanden. Mit anderen Worten bedeutet also ein Luftfaktor von 10 bis 12, dass man bezogen auf Normdruck (Atmosphärendruck) und Normtemperatur (Raumtemperatur) das 10- bis 12-fache Luftvolumen (m³) benötigt, um eine Volumeneinheit (m³) Reinstickstoff herzustellen.

Unter den Bedingungen eines Luftfaktors im Bereich von 10 bis 12 resultiert bei dem vorbekannten Verfahren erfahrungsgemäß eine Stickstoffreinheit am Auslass des Generators im Bereich von 4.0 bis 5.0. Zwar ist der Rohstoff Luft ubiquitär und die Verfügbarkeit der "Ressource" Luft, die zur Erzeugung von Druckluft benötigt wird, kann grundsätzlich als unendlich angesehen werden, das Prozessieren großer Luftvolumina ist jedoch nachteilig, da die Wirtschaftlichkeit der Stickstofferzeugung vor Ort unter anderem und nicht unwesentlich von der Menge an zu verarbeitender Druckluft abhängt. Je weniger Druckluft im Verhältnis zum gewonnenen Stickstoffstrom eingesetzt und prozessiert werden muss, desto kostengünstiger sind das resultierende Zielprodukt und damit das Gesamtverfahren. Daraus folgt, dass eine Senkung des Luftfaktors, mithin also nichts anderes als eine Verringerung des Druckluftbedarfs im Prozess, bei zugleich konstanter Menge und Qualität des Stickstoffs, unmittelbar zu einer deutlichen, wirtschaftlichen Verbesserung des Verfahrens führt. Es wäre also primär erstrebenswert, den Luftfaktor, d. h. also den Druckluftbedarf, bei der Stickstofferzeugung vor Ort kleiner zu gestalten, als bei dem aus dem Stand der Technik bekannten Verfahren.

Daneben bleibt die Reinheit des Inertgases (bestimmt mittels des Restsauerstoffgehalts des Stickstoffs) ein wichtiges Zielkriterium. Es versteht sich, dass der Stickstoff seine Funktion als Medium zur Inertisierung umso besser erfüllen kann, desto geringer sein Restsauerstoffgehalt ist. Während 4.0 bis 5.0 Stickstoff mit weniger als 100 ppm beziehungsweise 10 ppm Restsauerstoffgehalt für eine Vielzahl von Anwendungen bereits eine die Anforderungen erfüllende oder übererfüllende Reinheit aufweist, existieren spezielle Anwendungen, bei denen eine noch höhere Reinheit, beispielsweise 5.5 oder 6.0 (bis 1 ppm Restsauerstoffgehalt) von bestimmten Anwendern, z. B. in der Pharmaindustrie, vermehrt nachgefragt wird. Aber auch für Standardanwendungen spielt ein höherer Reinheitsgrad des Inertgases zunehmend eine wichtige Rolle. Dabei ist grundsätzlich davon auszugehen, dass die Erzielung eines reineren Produkts mit einem überproportional zunehmenden Aufwand einhergeht. Zudem stellt sich ein Problem dergestalt, dass der Luftfaktor und die Reinheit des Zielprodukts in wirtschaftlicher Hinsicht gegenläufige Kriterien darstellen. Eine Verringerung des Luftfaktors bedingt im Allgemeinen ein weniger reines Zielprodukt im PSA-Schritt. Insofern wäre eine Verfahrensweise wünschenswert, bei welcher der Luftfaktor verringert wird und dennoch über den Gesamtprozess eine hinreichende oder verbesserte Reinheit des Zielprodukts möglich ist. Dabei soll die Wirtschaftlichkeit des Gesamtverfahrens erhalten und vorzugsweise verbessert werden.

Schließlich ist auch der Platzbedarf einer Anlage beim Anwender ein Kriterium. Das neue Verfahren soll den Bau und Einsatz möglichst kompakter Anlagen zulassen, was wiederum einen klaren wirtschaftlichen Vorteil des Verfahrens darstellen würde.

In Anbetracht der zuvor gemachten Ausführungen besteht mithin die Aufgabe, das Verfahren zur vor Ort Herstellung von Reinstickstoff so weiterzubilden, dass Stickstoff von höchster Qualität im Bereich von 6.0 wirtschaftlicher erzeugt werden kann, also insbesondere mit kleinerem Luftfaktor und geringerem Platzbedarf für die Anlage, als bei den bekannten Verfahren.

Die genannte Aufgabe wird gelöst durch ein Verfahren mit den Merkmalen des Anspruchs 1. Bevorzugte Ausführungsformen werden in den abhängigen Ansprüchen unter Schutz gestellt. Im Hinblick auf die Verwendung des aus dem Verfahren resultierenden Zielprodukts zeigen die Ansprüche der entsprechenden Kategorie Lösungsmöglichkeiten für die der Erfindung zugrunde liegenden Probleme auf.

Dadurch, dass sich
ein Verfahren zur Herstellung von verdichtetem reinen Stickstoff mittels eines Stickstoffgenerators, bei welchem man
   a) mittels PSA-Technologie Stickstoff aus Druckluft erzeugt;
   b) den in a) erzeugten Stickstoff mittels eines Verdichtungsmittels umfassend einen Nach- oder Hochdruckverdichter auf einen Druck im Bereich von größer 10 bar bis etwa 400 bar verdichtet; und
   c) den gemäß b) verdichteten Stickstoff speichert,
dadurch auszeichnet, dass man
den Schritt a) in zwei Stufen ausführt, wobei man in einem Schritt a1) dem Stickstoffgenerator Druckluft unter Einhaltung eines Luftfaktors im Bereich von 2 bis 4 zuführt und den dadurch mit einer Reinheit im Bereich von 2.5 bis 3.5 erzeugten Stickstoff in einem Schritt a2) einer katalytischen Reduktion mit Wasserstoff unterwirft, gelingt es auf nicht ohne Weiteres vorhersehbare Weise, höchst reinen Stickstoff in konstant hoher Qualität (6.0) zur Verfügung zu stellen und zugleich die Wirtschaftlichkeit des Gesamtverfahrens deutlich zu verbessern.

Dabei wird im Rahmen der Erfindung ein Weg zur Erzeugung von höchst reinem 6.0 Stickstoff eingeschlagen, der entgegen der Praxis sowie der vorherrschenden Meinung die Isolierung von Stickstoff aus Druckluft mittels des eigentlichen und an sich bekannten PSA-Verfahrens nicht bis zu einer Reinheit von ca. 5.0 führt. Vielmehr wird im Sinne der Erfindung die PSA-Stufe lediglich zu einer Reinheit des Stickstoffs im Bereich von ca. 2.5 bis 3.5 geführt und erst danach wird in einem sich anschließenden Schritt mittels einer katalytischen Reduktion mit Wasserstoff höchst reiner 6.0 Stickstoff erzeugt. Obwohl diese zwei Schritte oder Stufen (zuerst PSA-Generator und dann eine als NKat-Stufe bezeichnete Stufe) auf den ersten Blick als aufwändiger eingeschätzt werden könnten als das bekannte Verfahren, lässt das neue Verfahren eine kompaktere Bauweise der Gesamtanlage zu, wobei überraschender Weise auch die Wirtschaftlichkeit des Gesamtverfahrens verbessert wird und zwar unter gleichzeitigem Erhalt eines im Hinblick auf seinen Restsauerstoffgehalt überlegenen Stickstoffprodukts.

Die "Drosselung" der PSA-Stufe auf einen Luftfaktor zwischen 2 und 4 führt zwar zu einem zunächst weniger reinen Stickstoff im Bereich von 2.5 bis 3.5, dafür ist jedoch der Druckluftbedarf des Verfahrens signifikant verringert. So kommt das neue Verfahren mit ca. nur einem Viertel bis einem Fünftel der für die bekannten Verfahrensweisen benötigten Druckluft aus. Die Einsparung durch diesen dergestalt verringerten Druckluftbedarf ist dabei so groß, dass sie durch den Zusatzaufwand einer nachgeschalteten NKat-Stufe nicht überkompensiert wird, wobei NKat-Schritt oder -Stufe die katalytische Reduktion mit Wasserstoff meint. Vielmehr ist die aus einem Stickstoff mit Restsauerstoffgehalten im Bereich von 2.5 bis 3.5 noch zu entfernende Restsauerstoffmenge vergleichsweise gering, so dass der Betrieb einer zusätzlichen NKat-Stufe wirtschaftlich ist. Zugleich wird ein Stickstoffprodukt von überlegener Reinheit im Bereich von 6.0 oder besser (Restsauerstoff nur noch 1 ppm oder noch besser) zur Verfügung gestellt. Zudem ist der Platzbedarf für eine Anlage zur Durchführung des erfindungsgemäßen Verfahrens trotz der zusätzlichen Baustufe geringer und die Anlage für das neue Verfahren kann kompakter ausgeführt werden als etwa die Anlage für das bekannte Verfahren. Das vorgeschlagene Verfahren ist damit dem bekannten Verfahren in mehrfacher Hinsicht deutlich überlegen.

Die durch den verringerten Luftfaktor erzielten Einsparungen bei der benötigten Druckluft beziehen sich sowohl auf den Energieaufwand zur Kompression als auch auf den Platzbedarf für den Kompressor, den Vorratskessel und die Rohrleitungen. Eine Beispielrechnung verdeutlicht diesen erfindungsgemäßen Vorteil. Wird beispielsweise Stickstoff in einer Reinheit von 5.0 in einer Menge von etwa 10 Nm³/h benötigt, so bedeutet dies für eine Anlage gemäß der DE 10 2009 058 054 A1 eine Menge von etwa 78 Nm³/h oder 87 m³/h, die vom Kompressor gefördert werden muss. Dies entspricht einer Leistung von 15 kW. Mit dem erfindungsgemäßen Verfahren wird hingegen lediglich eine Menge von etwa 37 Nm³/h oder 41 m³/h benötigt, um die geforderte Stickstoffmenge in einer Reinheit von 3.0 bereitzustellen, wofür nur 5,5 kW erforderlich sind. Die weitere Aufreinigung auf die Reinheit 5.0 erfolgt dann in der NKat-Stufe, die einen relativ kleinen Platzbedarf hat und äußerst niedrige Betriebskosten. Somit beträgt die erzielte Energieeinsparung über 60 %.

Mit dem erfindungsgemäßen Verfahren wird grundsätzlich Stickstoff aus verdichteter Umgebungsluft gewonnen. Hierzu wird verdichtete Umgebungsluft in Stickstofferzeugungsmittel in Form einer PSA-Anlage eingeleitet. Die verdichtete Umgebungsluft, auch als Druckluft oder Pressluft bekannt, kann entweder aus gegebenenfalls vor Ort beim Anwender vorhandenen Einrichtungen stammen, sie kann jedoch auch mit Hilfe einer weiteren, der eigentlichen Stickstoffseparation im Generator vorgeschalteten Verdichtereinheit, beispielsweise einem für den genannten Zweck bekannten, einfachen handelsüblichen Kompressor, aus Umgebungsluft erzeugt werden. Der Eingangsdruck der "Pressluft" in den Stickstoffgenerator im engeren Sinne kann über einen relativ weiten Bereich variieren. So kann der Eingangsdruck im Bereich von etwa 5 bar bis 10 bar liegen. Bevorzugt ist ein Eingangsdruck von größer als 5 bar, besonders bevorzugt sind etwa 7 bar bis 8 bar. Bevorzugt sind auch Eingangsdrucke von kleiner als 10 bar. Noch mehr bevorzugt sind Drucke im Bereich von größer als 5 bar und kleiner als 10 bar.

Darüber hinaus ist es beim Verfahren der Erfindung zweckmäßig neben dem Einlassdruck auch die Einlasstemperatur der Druckluft so zu regeln, dass die Temperatur zwischen 10 °C und 25 °C beträgt, vorzugsweise im Bereich von 15 °C bis 22 °C, ganz besonders bevorzugt bei 18 °C bis 21 °C liegt.

Die Press- oder Druckluft soll vor dem Einlass in den Stickstoffgenerator möglichst sauber und trocken sein, da sich dies bei der eigentlichen Separation günstig auf die Qualität des Stickstoffs als Zielprodukt auswirkt und zugleich verhindert werden kann, dass die in der PSA-Anlage eingesetzten Molekularsiebe z. B. durch Feuchtigkeit oder Partikel in Mitleidenschaft gezogen werden. Dazu kann ein z. B. aus der DE 10 2009 058 054 A1 bekannter Stickstofferzeuger oder -generator (im engeren Sinne) über eine so genannte Vorfiltration zur Entfernung von Verunreinigungen wie Feuchtigkeit, Öldämpfen, Partikeln und Kohlenwasserstoffen aus der in den Stickstofferzeuger einströmenden Druckluft verfügen. In diesem Zusammenhang kann jedoch der Kombination verschiedener Filtrationsvorgänge hinsichtlich von Art und Reihenfolge einzelner Filtrationsstufen eine nicht zu unterschätzende Bedeutung zukommen.

So ist es generell zur Aufbereitung der Druckluft zweckmäßig, einen Trockner zwischen Kompressor und Generator zu schalten. Wenn die Einlassluft von einem ölgeschmierten Kompressor erzeugt wird, ist es ebenfalls von Vorteil, einen Ölkoaleszenz- und Kohlefilter zu installieren, um Verunreinigungen der Druckluftzufuhr zu beseitigen, bevor diese den Stickstoffgenerator erreicht. Weiterhin ist es von Interesse, in den Generatoren zur Sicherheit Druck-, Temperatur- und Drucktaupunktsensoren zu installieren. Diese verhindern, dass verunreinigte Luft in das PSA-System eindringt und seine Komponenten beschädigt.

In zweckmäßiger Ausgestaltung des erfindungsgemäßen Verfahrens unterwirft man die Press- oder Druckluft, bevor man sie dem Stickstoffgenerator zuführt, also vor dem Einlass in das PSA-Modul, einer gründlichen Reinigungsbehandlung, wobei man sie in besonders bevorzugter Verfahrensabwandlung einer Abfolge oder Kaskade von vier oder mehr, vorzugsweise voneinander verschiedenen Reinigungs-, respektive Filtervorgängen unterwirft. Auf diese Art und Weise gelingt es besonders vorteilhaft, die Einlass-Druckluft von vermeidbaren Verunreinigungen zu befreien und die Standzeit der PSA-Anlage insbesondere im Hinblick auf die Lebensdauer des Molekularsiebs (CMS) signifikant zu erhöhen.

Dabei hat sich eine bestimmte Vorgehensweise als besonders günstig erwiesen, bei der man die Druckluft vor dem Einlass in den Stickstoffgenerator im Sinne einer Vorfiltration zunächst mit einem Partikelfilter zur Entfernung von groben Partikeln, Öl und Feuchtigkeit behandelt; dann mit einem Aktivkohlefilter zur Entfernung von restlichem Öl; danach mit einem Partikelfilter zur Entfernung von Feinstpartikeln, weiterem Restöl und weiterer Restfeuchtigkeit; und schließlich mit einem Feinst-Staubfilter. Wird die genannte Reihenfolge von Behandlungen und Filteroperationen eingehalten, gelingt eine effiziente und umfassende Aufreinigung der Druckluft, welche dann eine hohe Standzeit des Molekularsiebs verbunden mit einer hohen Reinheit des separierten Stickstoffs in Bezug auf Fremdpartikel, Öl und Feuchtigkeit garantiert. Wird von der genannten Reihenfolge der Filteroperationen signifikant abgewichen, kann dies zu einer Verringerung der Standzeit des Molekularsiebs im PSA-Modul oder zu einer negativen Beeinflussung der Stickstoffqualität hinsichtlich der genannten Kriterien führen.

Die einzelnen Reinigungs- oder Filteroperationen sowie die für die Aufreinigung von Druckluft einsetzbaren Filtervorrichtungen sind dem Fachmann bekannt und gehören zum Stand der Technik. Entsprechende Offenbarungen kann man unter Berücksichtigung der Randbedingung, dass die benötigte Druckluft den Anforderungen von ISO 8573-1:2010: 1.4.1 entsprechen sollte, beispielsweise der Literatur oder den Herstellerinformationen entnehmen.

Auch PSA-Generatoren gehören zum Stand der Technik. Im Wesentlichen funktioniert ein PSA-Stickstoffgenerator, indem die Stickstoffmoleküle von den Sauerstoffmolekülen in der Druckluft mit Hilfe der sogenannten Druckwechseladsorption getrennt werden. Als Adsorptionsmittel für die Sauerstoffmoleküle in der Druckluft dienen bestimmte Molekularsiebe (Carbon Molecular Sieve, kurz auch als CMS bezeichnet). Die Druckwechseladsorption vollzieht sich in wenigstens zwei separaten Druckbehältern, die jeweils mit einem CMS gefüllt sind und die sich abwechselnd im Trenn- und Regenerationsprozess befinden. Beim angewendeten Trennprinzip macht man sich insbesondere die Affinitätsunterschiede der Luftbestandteile zu speziellen Absorptionsmedien zu Nutzen. Zunächst tritt vorfiltrierte und vorgereinigte Druckluft in einen ersten Behälter ein. Da Sauerstoffmoleküle ein anderes Adsorptionsverhalten zeigen als Stickstoffmoleküle, kommt es zu einer Separation von Stickstoff und Sauerstoff. Dabei erhält man aufgrund höherer Wechselwirkungen des Sauerstoffs mit dem CMS einen vom Sauerstoff im Wesentlichen befreiten Gasstrom aus Stickstoff. Der Großteil des im ersten Behälter erzeugten Stickstoffs verlässt die Anlage und kann zwischengelagert werden. Ein kleiner Teil des erzeugten Stickstoffs strömt aber in umgekehrter Richtung in einen zweiten Behälter. Diese Strömung ist erforderlich, um den Sauerstoff zu verdrängen, der sich in der vorherigen Adsorptionsphase im zweiten Behälter angesammelt hat. Durch Entlastung des Drucks im zweiten Behälter verlieren die CMS ihre Fähigkeit, die Sauerstoffmoleküle zurückzuhalten. Diese lösen sich von den CMS und werden durch die geringe Stickstoffrückströmung am ersten Behälter ausgeleitet (Reinigungs- oder Regenerationsphase). Nun gleicht sich der Druck in den Behältern aus, und die Phasen wechseln zwischen Adsorption und Regeneration. Das CMS im ersten Behälter wird gesättigt, während der zweite Behälter drucklos ist, wodurch der Adsorptionsprozess neu starten kann. Dieser Prozess wird auch als "Druckwechsel" bezeichnet. Dies beinhaltet, dass bestimmte Gase bei einem höheren Druck aufgenommen und bei einem niedrigeren Druck freigesetzt werden.

Die Reinheit des den Generator verlassenden Stickstoffstroms hängt grundsätzlich von einer Mehrzahl von Faktoren ab. Beachtlich sind unter anderem Druck, Temperatur, Luftfaktor und Reinheit des Druckluftstroms am Einlass sowie Art, Menge und Natur des Molekularsiebs (CMS). Im Vergleich zu Membranseparatoren, deren Leistungsvermögen auf die Erzeugung von 3.0 Stickstoff beschränkt ist, gelingt bei Einsatz der PSA-Methode durch geeignete Wahl der zuvor genannten Parameter die Erzeugung von Stickstoff in einer Reinheit zwischen 3.0 und etwa 5.0.

Im Rahmen der Erfindung wird nun vorgeschlagen, das an sich bekannte PSA-Verfahren so zu führen, dass der den PSA-Generator verlassende Stickstoffstrom eine Reinheit von nur ca. 3.0 aufweist. Dies mag auf den ersten Blick paradox anmuten, führt jedoch zu einer deutlichen Verringerung des Aufwands in der PSA-Stufe, was sich besonders vorteilhaft beim oben beschriebenen Luftfaktor zeigt. Insbesondere werden mit dem erfindungsgemäßen Verfahren folgende Vorteile erzielt:
Durch die zweistufige Verfahrensführung mit der Reinigung des Stickstoffs auf nur eine Reinheit von etwa 3.0 und anschließende katalytische Reinigung in der zweiten Stufe fällt nur ein minimal höherer Energiebedarf an als bei der herkömmlichen PSA-Technik für Stickstoff 3.0 allein, es wird jedoch ein noch reinerer Stickstoff, nämlich 6.0, damit erzielt als bisher damit erreichbar war. Möglich wird dies durch den niedrigen Luftfaktor von 2-4.

Ferner erlaubt die erfindungsgemäße Verfahrensführung eine Verkleinerung der Anlagengröße bei gleicher Stickstoffleistung. Sowohl die Aggregate und Einrichtungen zur Drucklufterzeugung und -förderung als auch die Behälter der PSA-Stufe können kompakter ausfallen, da weniger Luft zu behandeln ist. Hier sind Verringerungen des Platzbedarfs um den Faktor 5 möglich. Selbstverständlich sinken damit auch die Anschaffungskosten der Komponenten.

Der aus dem PSA-Generator austretende Stickstoff weist im Rahmen der Erfindung bei einem Luftfaktor von etwa 2 bis 4 eine Reinheit von etwa 99,9 % (= etwa 3.0 Stickstoff) auf. Zur weiteren Aufreinigung des so erzeugten Stickstoffs schlägt nun die Erfindung vor, den ca. 3.0er Stickstoff einer Nachbehandlung zu unterwerfen. Ziel dieser Nachbehandlung ist eine weitergehende Entfernung von Sauerstoff aus dem Stickstoff. Eine sehr zweckmäßige Nachbehandlung des Stickstoffs ist eine an sich bekannte katalytische Reduktion des Restsauerstoffs mit Wasserstoff, welche im Rahmen der Erfindung auch als NKat-Behandlung oder -Stufe bezeichnet wird. Dabei macht man sich die Fähigkeit zu Nutzen, dass Wasserstoff als Reduktionsmittel an bestimmten Katalysatoren sehr effizient mit Sauerstoff umgesetzt werden kann, wobei Wasser / Feuchtigkeit als leicht abtrennbares "Abfallprodukt" entsteht.

Die zur katalytischen Reduktion des Restsauerstoffs einsetzbaren Katalysatoren umfassen im Rahmen der Erfindung grundsätzlich alle dem Fachmann für solche Zwecke bekannten Substanzen. Hierzu gehören unter anderem Platin oder Palladium in metallischer oder oxidischer Form, wahlweise auf an sich bekannten Trägersubstanzen, wie z. B. bekannten auf Aluminium basierenden Materialien. Ebenso können Ruthenium oder Rhodium basierte katalytisch wirksam Materialien zum Einsatz kommen, wobei diese Substanzen einen höheren Preis aufweisen als die Erstgenannten. Eher seltener, aber dennoch möglich, ist die Verwendung weiterer Metalle oder von deren Verbindungen auf Basis von Nickel, Kobalt, Kupfer und/oder Zink. Für die Erfindung bevorzugt sind besonders die katalytisch hoch wirksamen Metalle Platin und Palladium oder deren Verbindungen. Als Trägersubstanzen kommen alle dem Fachmann geläufigen Stoffe in Frage, vorzugsweise solche auf Aluminiumbasis, ganz besonders bevorzugt die Oxide des Aluminiums. An die äußere Form oder Gestalt des Katalysators gibt es keine bestimmten Anforderungen. Bevorzugt sind solche Katalysatormaterialien mit hoher (innerer) Oberfläche. Zweckmäßig sind asphärische oder sphärische mit dem katalytisch wirksamen Stoff beschichtete Trägergranulate.

Die NKat-Stufe wird dabei grundsätzlich so betrieben, dass ein Stickstoffstrom aus dem Stickstoffgenerator nur dann in das Nkat-Modul eingeleitet wird, wenn er Mindestanforderungen an die Reinheit, insbesondere den Restsauerstoffgehalt erfüllt. Diese Mindestanforderungen liegen bezüglich des Restsauerstoffgehalts bei ca. 2.5, vorzugsweise bei 3.0, was eine Reinheit von 99,5 % beziehungsweise 99,9 % bedeutet. Liegt die Reinheit des Stickstoffs am Einlass bei weniger als 2.5, so ist die Wirtschaftlichkeit des Verfahrens wegen eines erhöhten Wasserstoffbedarfs nachteilig. Ist die Reinheit größer als 3.5, kann das Verfahren unwirtschaftlich werden, weil der Luftfaktor für den Stickstoffgenerator der vorherigen Stufe außerhalb eines bevorzugten Korridors von etwa 2.5 bis 4.5 liegt. Ebenso kann es zu einer vorzeitigen Erschöpfung des Katalysators kommen, wenn der Restsauerstoffanteil zu hoch ist.

Zur Gewährleistung einer Einleitung von Stickstoff der erforderlichen Qualität in die NKat-Stufe ist es bevorzugt, den Stickstoffstrom vor Einleitung einer kontinuierlichen Sauerstoffmessung zu unterwerfen. Diese kann mit dem Fachmann bekannten Sonden zur kontinuierlichen Messung erfolgen.

Solche Mittel zur online-Messung des Sauerstoffgehalts sind dem Fachmann bekannt und am Markt als Zubehör erhältlich. Bei der online-Sauerstoffsensorik für die industrielle Prozessmesstechnik verwendet man Sensoren, welche nach bekannten Verfahren arbeiten. So kann es sich beispielsweise um spezielle paramagnetische Messverfahren, bestimmte spektroskopische Lasermessverfahren oder Zirkoniumdioxidsensoren handeln, welche die Messung von Sauerstoffspuren im ppm-Bereich in Gasen wie Stickstoff zulassen.

Die von den Mitteln zur Bestimmung des Sauerstoffgehalts ermittelten Werte lassen sich zweckmäßig zur Regelung von verschiedenen Prozessschritten verwenden. So ist es damit prinzipiell möglich, den Stickstoffstrom solange zuzulassen oder zu unterbrechen, bis ein vorgegebener Höchstwert für den Sauerstoffgehalt des nachverdichteten Stickstoffs nicht mehr über- oder unterschritten wird. Dies kann durch einen an sich bekannten Mess- und Regelkreis erreicht werden.

Sollte der Restsauerstoffgehalt des Stickstoffstroms nach Auslass am Generator und vor Einlass in die NKat-Stufe oberhalb einer Reinheit entsprechend von 3.5 liegen, sieht das erfindungsgemäße Verfahren das Verwerfen des inkonformen Stickstoffs solange vor, bis er wieder die Anforderung in Bezug auf den Sauerstoffgehalt erfüllt. Zum Beispiel kann der non-konforme Stickstoff gefahrlos in die Umgebungsluft abgeblasen werden.

Neben dem zu reinigenden Stickstoffstrom wird beim erfindungsgemäßen Verfahren auch ein Wasserstoffstrom in die Nkat-Stufe kontinuierlich eingeleitet. Der Wasserstoff wird dabei zweckmäßig aus Vorratsdruckflaschen oder Bündeln von Flaschen bezogen. An die Qualität des Wasserstoffs werden keine besonderen Anforderungen gestellt. Einsetzbar sind die üblichen im Handel erhältlichen Wasserstoffqualitäten, vorzugsweise 5.0 oder besser. Bezogen auf das Volumen des Stickstoffstroms wird nur ein vergleichsweise geringer Strom an Wasserstoff zur Behandlung des Stickstoffstroms benötigt. Bei einer Reinheit des Stickstoffs von 99,9 % (3.0 Stickstoff) bedarf es bei einem Stickstoffvolumen von 1000 Litern lediglich ca. 1 bis 2 Liter Wasserstoff zur weitestgehenden Umsetzung des Restsauerstoffs bis zu einer Reinheit des Stickstoffs von 6.0. Dabei sind eventuell über den Wasserstoff eingeschleppte Verunreinigungen vernachlässigbar im Vergleich etwa zur erzeugten Feuchtigkeit.

Bei der katalytischen Umsetzung des Restsauerstoffs entsteht, wie bereits erwähnt, als "Abfallprodukt" Wasser. Diese Feuchtigkeit wird dem aus der NKat-Stufe austretenden Stickstoffstrom wieder entzogen, beispielsweise über eine nachgeschaltete Trocknungs- / Reinigungsoperation / -stufe. Hierfür kommen dem Grunde nach alle bekannten Verfahren zur Abtrennung von Feuchtigkeit aus Gasströmen in Frage. Ein wesentliches Kriterium bei der Auswahl geeigneter Vorrichtungen stellt die Anforderung an die Restfeuchte des Gases dar, dass das Gas nach der Entspannung von etwa 300 bar auf etwa 30 bar noch ein Taupunkt von höchstens -35 °C haben sollte. Von daher sind in der Regel wenigstens Adsorptionstrockner vorzusehen.

Der Auslassgasstrom an der NKat-Stufe kann auch einen geringen Rest an nicht umgesetztem Wasserstoff aufweisen. Im Sinne der Erfindung ist es daher von besonderem Nutzen, nicht nur die Feuchtigkeit aus dem Stickstoffgasstrom, sondern auch den gegebenenfalls vorhanden Rest-Wasserstoff in der nachgeschalteten Behandlungsstufe zu entfernen. In bevorzugter Abwandlung des erfindungsgemäßen Verfahrens wird daher der Auslassgasstrom der Nkat-Stufe einer mehrstufigen, bevorzugt zweistufigen, Nachbehandlung unterzogen.

In einem ersten Schritt der Nachbehandlung kann der Stickstoffstrom einer ersten Kältebehandlung unter Zuhilfenahme einer Kältekompressionsmaschine (kurz Kältekompressor genannt) unterzogen werden. Da das Vermögen eines Gases Feuchtigkeit aufzunehmen mit abnehmender Temperatur sinkt, wird durch die Verdichtung mittels Kältekompressor eine erste Menge Feuchtigkeit aus dem gasförmigen Zustand in den flüssigen Zustand überführt und geeignet abgeschieden. Durch die Kältebehandlung wird der Stickstoffstrom auf Temperaturen unterhalb von 0 °C, bevorzugt tiefer als -10 °C und noch mehr bevorzugt tiefer als -20 °C vorgekühlt. Zweckmäßig wird bei diesem ersten Nachbehandlungsschritt mehr als ca. 50 % bezogen auf die gesamte Masse des Wassers im Gasstrom vor der ersten Kältebehandlung abgeschieden, bevorzugt mehr als 75 %, ganz besonders bevorzugt mehr als 95 %. Die Abtrennung des Wassers aus der Kältebehandlung wird über handelsübliche Vorrichtungen wie zum Beispiel Granulattrockner oder Hochdruckkältetrockner erreicht.

Der so auf Temperaturen unterhalb von 0 °C, bevorzugt tiefer als -10 °C und noch mehr bevorzugt tiefer als -20 °C vorgekühlte Stickstoffstrom wird dann einem sich anschließenden zweiten Schritt der Nachbehandlung unterzogen. Dieser zweite Nachbehandlungsschritt umfasst die Wechselwirkung mit hygroskopischem Material, wie z. B. Silicagel, und kombiniert diesen Trocknungsschritt mit einer weiteren Kältebehandlung im Druck-Wechsel-Verfahren. Dabei wird der Stickstoffstrom auf seinen Drucktaupunkt von ca. -40 °C abgekühlt. In diesem Zusammenhang versteht man unter dem Drucktaupunkt diejenige Temperatur bei erhöhtem Druck, bei welcher der Gasstrom mit Wasserdampf gesättigt ist. Beim weiteren Abkühlen auf Temperaturen unterhalb des Drucktaupunktes kondensiert die Restfeuchte aus dem Gasstrom aus und kann über geeignete Mittel abgeschieden werden. Zugleich kommt es bei den beschriebenen Bedingungen von Temperatur und erhöhtem Druck zu einer Separation des gegebenenfalls vorhandenen Rest-Wasserstoffs vom Stickstoff. Dieses Phänomen ist bekannt und kann unter anderem einem Phasendiagramm / Mischungsdiagramm für binäre Gasmischungen entnommen werden.

Durch die beschriebene zweistufige Nachbehandlung des Gasstroms aus der NKat-Stufe gelingt es, in einem wirtschaftlichen Verfahren kontinuierlich Stickstoff von höchster Reinheit (6.0) zu erzeugen. Insbesondere erfüllt der die Nachtrocknung verlassende Stickstoff am Ende des Schrittes a) bereits alle Güte-Kriterien für eine Vielzahl von Anwendungen.

An die Erzeugung des Stickstoffs (Schritt a)) schließen sich beim Verfahren der Erfindung die Schritte b) = Verdichten und c) = Lagerung an.

Der Verdichtungsschritt dient zur Vorbereitung einer wirtschaftlichen Zwischenlagerung des Stickstoffs vor seinem Verbrauch. Im Generator erzeugter und dann wie beschrieben nachbehandelter Stickstoff, der vorzugsweise in der beschriebenen mehrstufigen Nachbehandlung auf eine Temperatur von etwa -40 °C gekühlt und weiterhin bevorzugt bereits auf bis zu etwa 7 bar bis 8 bar verdichtet wurde, strömt dann über eine Druckleitung in entsprechende Verdichtungsmittel. Vorzugsweise sieht man zwischen Erzeugungsmittel / Nachbehandlungsmittel einerseits und Verdichtungsmittel andererseits noch einen oder mehrere Produkttanks vor. Die Produkttanks dienen zur Sammlung des erzeugten Stickstoffs und können aufgrund ihres Volumens einen konstanten Durchfluss sowie eine konstante Reinheit des vorverdichteten Stickstoffs gewährleisten.

Zum Verdichten im Schritt b) wird im Rahmen der Erfindung wenigstens ein Nach- und/oder Hochdruckverdichter eingesetzt. Die Mittel zur Verdichtung sind stromab der Erzeugungsmittel und den Mitteln zur Nachbehandlung angeordnet und sind in der Lage, den von den Erzeugungs- / Nachbehandlungsmitteln bevorzugt über wenigstens einen Produkttank einströmenden oder angesaugten Stickstoff von seinem Eingangsdruck im Bereich von größer 1 bar bis etwa 10 bar auf einen Ausgangsdruck im Bereich von größer als 10 bar bis hin zu etwa 400 bar zu verdichten. Zweckmäßig werden für diese "Nachverdichtung" Mittel eingesetzt, welchen einen Druckbereich von größer als 10 bar bis etwa 300 bar abdecken. Besonders zweckmäßig ist eine Nachverdichtung auf einen Druck im Bereich von 200 bar bis 300 bar. Noch mehr bevorzugt ist hierfür der Bereich von 220 bar bis etwa 270 bar. Zu den im Rahmen der Erfindung mit Erfolg einsetzbaren Nachverdichtern gehören an sich bekannte Hochdruckverdichter oder Kompressoren. Im Rahmen der Erfindung können dabei alle handelsüblichen Typen von Hochdruckverdichtern eingesetzt werden. So ist es möglich, zwei- oder mehrstufige Kolbenkompressoren, Schraubenverdichter, Rotationskompressoren oder auch Membrankompressoren einzusetzen. Von diesen sind Kolbenkompressoren, insbesondere zweistufige, noch mehr bevorzugt dreistufige Kolbenkompressoren, für die Erfindung von ganz besonderem Vorteil.

Einerseits ist es für das Verfahren der Erfindung möglich, so genannte ölfreie Kompressoren einzusetzen. Dies bedeutet, dass es ausgeschlossen ist, dass der zu verdichtende Stickstoff mit ölbehafteten Bauteilen des Kompressors in Berührung kommt. Diese Lösung ist allerdings recht aufwändig und insbesondere sind ölfreie Kompressoren deutlich teurer und wartungsintensiver als ölgeschmierte Kompressoren. Aus diesem Grund werden als Nachverdichter für das Verfahren der Erfindung ölgeschmierte Kolbenkompressoren, ganz besonders drei oder vierstufige ölgeschmierte Kolbenkompressoren, bevorzugt. Diese gewährleisten zweckmäßig in Verbindung mit einer Stickstoffaufbereitung ein besonders günstiges Preis/Leistungs-Verhältnis.

Sofern im Verfahren der Erfindung keine ölfreien Verdichtungsmittel zum Einsatz kommen können sieht man zweckmäßig eine weitere Nachbehandlung des Stickstoffstroms im Anschluss an die Verdichtung auf die zuvor genannten hohen Drucke vor. Hierbei kann es sich beispielsweise um eine Behandlung mit Filtermitteln und/oder Abscheidern handeln, welche der Stickstoff durchströmen kann.

In einer bevorzugten Ausführungsform des erfindungsgemäßen Verfahrens wird der Stickstoffgasstrom vor oder nach der Verdichtung auf Drucke zwischen 10 bar und 400 bar wenigstens einmal gefiltert, wobei der Stickstoff im Ergebnis auf Atemluftqualität aufbereitet wird. Hierfür eignen sich unter anderem Mikrofeinstfilter oder Aktivkohlefilter. Zweckmäßig setzt man in diesem Zusammenhang zwei hintereinander geschaltete Filtermittel oder Filtereinrichtungen ein, welche nach unterschiedlichen Trennprinzipien arbeiten. So kombiniert man besonders zweckmäßig eine Ölabscheidungsstufe mit einer Öldämpfe-Entfernung. Dabei werden die Filter zweckmäßig so angeordnet, dass angesaugter Stickstoff zunächst in eine erste Filterstufe einströmt. Nach Verlassen der ersten Filterstufe lässt man dann den Stickstoff in eine zweite Filterstufe strömen. In der ersten Filterstufe findet besonders zweckmäßig die Ölabscheidung über eine Ölabscheiderpatrone statt. In der zweiten Filterstufe werden dann insbesondere vorteilhaft Öldämpfe an Aktivkohle gebunden.

Nach dem Hochdruckverdichten des Zielprodukts in einem Schritt b) sieht das Verfahren der Erfindung als weiteren Schritt c) die Lagerung des Stickstoffs bis zum Verbrauch vor. Zu diesem Zweck strömt der hochverdichtete Stickstoff, gegebenenfalls nach weiteren Reinigungsoperationen, in Mittel zur Speicherung des hochverdichteten Stickstoffs. Hierbei handelt es sich um Hochdruckvorratsspeicher beispielsweise in Form von geeigneten Tanks oder hochdruckfesten Gasflaschen oder Flaschenbündeln, welche mit dem Hochdruckverdichter über Druckleitungen verbunden sind.

Jedes Modul der erfindungsgemäßen Anlage wird individuell durch eine detaillierte Sensorik überwacht und verfolgt. In einer bevorzugten Ausführungsform des erfindungsgemäßen Verfahrens werden alle wichtigen Parameter der Stickstoffqualität in den einzelnen Stufen sowie der Bündeldruck auf einem ortsunabhängigen Touchpanel wiedergegeben und können von dort aus via VNC ferngesteuert werden.

In weiteren Ausgestaltungsvarianten der Erfindung kann die Steuerungseinheit der Stickstoffanlage über verschiedene Schnittstellen mit der Steuerung einer Laserschneidanlage verbunden werden, sodass die gesamte Stickstoffproduktion über das Touchpanel an Laseranlage überwacht und gesteuert werden kann.

Vorzugsweise ermöglicht die Steuerungseinheit das Erstellen von individuellen Alarmmeldungen, welche bei Bedarf per E-Mail oder SMS direkt an den Nutzer übermittelt werden. Dadurch wird in Kombination mit dem ortsunabhängigen Touchpanel eine komfortable weltweite Fernsteuerung der Anlage möglich. Alle Servicemeldungen werden in Echtzeit auf der Steuerungseinheit gespeichert und können dort jederzeit eingesehen werden.

In einer weiteren vorteilhaften Ausgestaltungsvariante lässt sich die Steuerungseinheit über ein Gebäudeleitsystem ansteuern und erfasst einen Stromüberschuss einer vorhandenen Photovoltaik-Anlage einer vorhandenen Photovoltaik-Anlage. Dieser Stromüberschuss kann dann intelligent zur Stickstofferzeugung genutzt werden, indem die Steuerungseinheit die Stickstofferzeugung in Abhängigkeit vom Vorhandensein eines Stromüberschuss steuert.

Eine integrierte Zeitschaltuhr sorgt dafür, dass die Anlage nach Belieben eingestellt und auf die vorhandene Druckluft und überschüssigen Strom angepasst werden kann.

Die gesamte Anlage bedarf keinen festen Mitarbeiter, da Sie ein in sich geschlossenes System ist und die Touch Steuerung die komplette Kontrolle der Anlage übernimmt.

Zur Erfindung gehört auch die Verwendung des nach dem wie hierin beschriebenen Verfahrens hergestellten Stickstoffs mit einem maximalen Restsauerstoffgehalt von 1 ppm.

In bevorzugter Verwendung dient der erzeugte Stickstoff zur Anwendung als Schutzgas in der Lebensmittelindustrie.

In weiter bevorzugter Verwendung dient der erzeugte Stickstoff zur Anwendung als Schutzgas für Laserschneid-Anwendungen.

Nachfolgend wird die Erfindung eingehender anhand eines Beispiels unter Verweis auf die beigefügten Figuren eingehender erläutert.

In den Figuren zeigen:
- **Figur** 1:: ein schematisches, vereinfachtes Blockdiagramm einer Anlage (Stickstoffgenerators) zur Erzeugung von Stickstoff nach dem PSA(L)-Verfahren;
- **Figur 2:**: ein Fließdiagramm einer PSA(L)-Anlage (Stickstoffgenerators); und
- **Figur 3:**: ein Fließdiagramm eines Kolbenkompressors als Verdichtungsmittel einer erfindungsgemäßen PSA(L)-Anlage;
- **Figur 4:**: ein Fließdiagramm einer erfindungsgemäßen PSA(L)-Anlage.

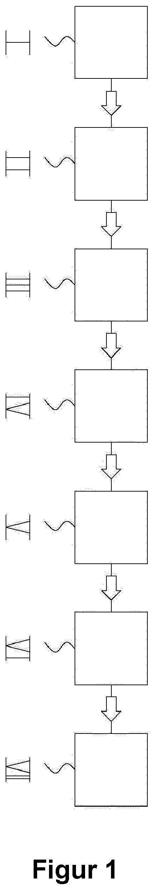

In **Figur 1** ist ein schematisiertes Blockdiagramm einer vereinfachten PSA(L)-Anlage dargestellt. Dieses Blockdiagramm kann zur Verdeutlichung und zum Verständnis des prinzipiellen Aufbaus einer Anlage sowie der grundsätzlichen Abläufe in der Anlage dienen. Das Bezugszeichen (**I**) steht für eine Schutzfiltration. (**II**) bedeutet einen Stickstofferzeuger im engeren Sinn. Die Schutzfiltration (**I**) ist dem Stickstofferzeuger im engeren Sinn (**II**) vorgeschaltet und mit diesem verbunden. An den Stickstofferzeuger (**II**) schließt sich in Fliesrichtung ein mit dem Stickstofferzeuger verbundener Stickstoffproduktspeicher (III) an. Auf den Stickstoffproduktspeicher (**III**) folgt ein Stickstoffvorratsspeicher (**IV**) für einen Nachverdichter (**V**). Der Nachverdichter (**V**) ist im konkreten Fall ein Hochdruck-Verdichter, der stromaufwärts mit dem Stickstoffvorratsspeicher (IV) und stromabwärts mit einem Flaschenbündel (VI) in Strömungsverbindung steht. Schließlich folgt auf das Flaschenbündel (VI) in Strömungsrichtung des Gases stromabwärts gesehen eine weitere Schutzfiltration (VII).

Von den in Figur 1 dargestellten Elementen einer PSA(L)-Anlage entsprechen der Stickstofferzeuger (II), der Nachverdichter (V) sowie das Flaschenbündel (VI) den erfindungsgemäß essentiellen Mitteln zur Erzeugung (a), Verdichtung (b) beziehungsweise Speicherung (c) des nachverdichteten Stickstoffs.

Im gezeigten Beispiel fließt Druckluft oder Stickstoff von (**I**) in Richtung (**VII**), wodurch die prinzipielle Strömungsrichtung definiert wird. Die "onsite" beim Anwender vorhandene oder in einem vorgeschalteten Aggregat erzeugte Druckluft wird in die Schutzfiltration (**I**) eingeleitet und durchströmt diese. Nach der Schutzfiltration (**I**) gelangt die gereinigte Druckluft in den Stickstofferzeuger (**II**) im engeren Sinne. Dieser Stickstofferzeuger (**II**) gestattet die Abtrennung des Sauerstoffs aus der Druckluft und erzeugt reinen vorverdichteten Stickstoff mit einem Druck bis zu etwa 10 bar. Vom Stickstofferzeuger (**II**) gelangt der Stickstoff zunächst in einen Sammeltank (**III**). Danach gelangt der abgetrennte vorverdichtete Stickstoff in einen Vorratsbehälter (**IV**), in welchem ein Stickstoffreservoir für die Nachverdichtung mit dem Nachverdichter (**V**) besteht. Der Nachverdichter (**V**) saugt den Stickstoff aus dem Speicher (**IV**) an und verdichtet den vorverdichteten Stickstoff auf den gewünschten Druck im Bereich von größer als 10 bar bis etwa 400 bar. Der nachverdichtete Stickstoff gelangt dann in Speichermedien, wie etwa das Flaschenbündel (**VI**), welches zur Aufnahme einer relativ großen Menge an Arbeitsstickstoff der gewünschten Reinheit ausgelegt ist. Vom Flaschenbündel (**VI**) kann der Stickstoff vom Verbraucher abgefordert werden, wobei er vorher noch eine weitere Schutzfiltration (**VII**) durchläuft, wodurch eine extrem hohe Produktqualität mit großer Sicherheit gewährleistbar ist.

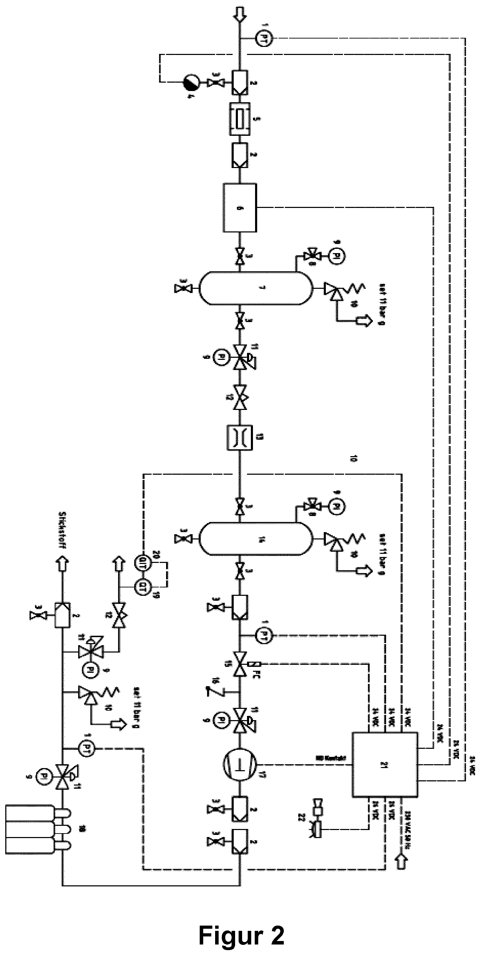

Bei **Figur 2** handelt es sich um das Fließdiagramm einer PSA(L)-Anlage. Druckluft gelangt zunächst in den Filter (**2**). Der Filter (**2**) ist ein Kältetrockner, welcher über den Kugelhahn (**3**) mit einem elektrischen Kondensatableiter (**4**) verbunden ist. Der Kältetrockner (**2**) befreit die einströmende Druckluft von gegebenenfalls mitgeschlepptem Kondenswasser, welches über einen nicht näher dargestellten Druckluftkompressor oder generell über die Anwenderdruckluft mit eingeführt wird. Das Kondensat kann über den Kugelhahn (**3**) und den elektrischen Kondensatableiter (**4**) aus dem Druckluftstrom entfernt werden. Nach Entfernung des Kondenswassers gelangt die dergestalt getrocknete Druckluft in eine Schutzfiltration umfassend einen Aktivkohleadsorber (**5**) und einen weiteren Filter (**2**). Die Schutzfiltration befreit die Druckluft von Schmutzpartikeln, Öl-Aerosolen und Öldämpfen, welche z. B. durch ölgeschmierte Druckluftkompressoren mit eingebracht werden. Nach der Schutzfiltration strömt die getrocknete und gereinigte Druckluft in den eigentlichen Stickstoffgenerator oder -erzeuger im engeren Sinne (**6**). Im Stickstoffgenerator (**6**) wird nach dem Pressure Swing Adsorption (PSA) Verfahren der gewünschte Stickstoff aus der verdichteten Umgebungsluft (Druckluft) produziert. Dies geschieht über die Bindung der Sauerstoffanteile der Druckluft an bestimmte Adsorbentien, wie speziell behandelte Aktivkohle. Des Weiteren verfügt der Stickstoffgenerator (**6**) über eine nicht näher dargestellte Sauerstoff-Analyse, welche kontinuierlich den Restgehalt an Sauerstoff im Stickstoff ermittelt. Vom Stickstoffgenerator (**6**) gelangt der Stickstoff in einen Produkt- oder Sammeltank (**7**), welcher ein Anlagenteil des Stickstoffgenerators (**6**) ist. Der Sammeltank (**7**) ist über einen Kugelhahn (**3**) mit dem Stickstoffgenerator (**6**) in Verbindung. Außerdem weist der Tank (**7**) eine Produktentnahmemöglichkeit über einen weiteren Kugelhahn (**3**) auf. Mittels eines weiteren Dreiwegekugelhahns (**8**) und eines Druckmessers (**9**) kann der Druck im Sammeltank (**7**) gemessen und angezeigt werden. Zur Vermeidung von Störungen weist der Sammeltank (7) weiterhin ein Sicherheitsventil (**10**) auf, welches den Stickstoff bei Druckanstieg auf unerwünschte Werte solange abbläst, bis ein voreingestellter Grenzwert, zum Beispiel 11 bar, nicht mehr überschritten wird. Grundsätzlich dient der Sammel- oder Produkttank zur Vergleichmäßigung der Produktqualität und zur Sicherstellung eines konstanten Durchflusses sowie einer konstanten Reinheit. Stromab vom Produkttank (**7**) schließt sich in Richtung Vorratsspeicher (**14**) eine Durchflussmesser/Drosselventil/Druckminderer-Einheit an. Durch einen Kugelhahn (**3**) gelangt Stickstoff in einen Druckregler (**11**), welcher es gestattet, den Druck mittels einer Druckanzeige (**9**) anzuzeigen. Daran schließen sich in Strömungsrichtung ein Drosselventil (**12**) sowie ein Durchflussmesser (**13**) an. Diese Einheit ist für den gewünschten Durchfluss und Ausgangsdruck zuständig. Außerdem wird über diese Einheit der gewünschte Reinheitsgrad des Stickstoffs sichergestellt. Der Durchflussmesser (**13**) steht über einen weiteren Kugelhahn (**3**) mit einem Vorratsspeicher (**14**) in Verbindung. Hierbei handelt es sich um den Vorratsspeicher (**14**) für den Hochdruckverdichter (**17**). Aufgabe des Vorratsspeichers (**14**) ist die Sicherstellung des Betriebs des Hochdruckverdichters (**17**). Zunächst weist der Vorratsspeicher (**14**) dieselben Anzeigen- und Sicherungseinrichtungen auf, wie der Produkttank (**7**). So erkennt man einen Kugelhahn (**3**), eine Druckanzeige (**9**) mit Dreiwegehahn (**8**) sowie ein Sicherheitsventil (**10**). Auch der Ausgang des Produktstroms aus dem Speicher (**14**) ist analog dem Speicher (**7**) zu sehen. Über einen Kugelhahn gelangt der Produktstrom dann allerdings in einen weiteren Filter (**2**), von wo der Stickstoff über ein Magnetventil (**15**) mit einem Druckregler (**11**) und einer Anzeige (**9**) mit dem Nachverdichter (**17**) verbunden ist, wobei zwischen Magnetventil (**15**) und Druckregler (**11**) / Druckanzeige (**9**) noch ein Rückschlagventil / Unterdruckventil (**16**) vorgesehen ist. Diese Regeleinheit (**15**), (**16**), (**11**), (**9**) lässt den Hochdruckverdichter (**17**) über das eingestellte Druckband ein- und ausschalten. Als Sicherheit ist das Unterdruckventil (**16**) eingebaut, welches ein Vakuum des Nachverdichters (**17**) verhindert. Das Magnetventil (**15**) öffnet und schließt die Stickstoffzufuhr zum Nachverdichter (**17**). An den Nach- oder Hochdruckverdichter (17) schließen sich zwei Filterstufen (2) mit jeweils einem Kugelhahn (3) an. Die beiden Filterstufen (2, 2) sorgen als Schutzfiltration für eine Aufbereitung des nachverdichteten Stickstoffs in Atemluftqualität. Dies kann in zwei Schritten erfolgen. In der ersten nachgeschalteten Filterstufe (2) findet eine Ölabscheidung mittels einer Ölabscheiderpatrone (2) statt. Beim zweiten Schritt werden Öl-Dämpfe in einer Filterstufe (2) gebunden, welche z. B. Aktivkohle enthält. Die zweite Filterstufe (2) steht mit einem Flaschenbündel (18) in Verbindung. Das Flaschenbündel (18) ist ein Hochdruckvorratsspeicher für den Endverbraucher. Das Flaschenbündel (18) wird bis zum gewählten Enddruck vom Hochdruckverdichter (**17**) gefüllt. Die Stickstoffentnahme aus dem Flaschenbündel (**18**) erfolgt über nachgeschaltete Hochdruck-Partikel-Filter (**2**), welche dazu dienen, Verunreinigungen zu binden, welche sich aus dem Flaschenbündel (**18**) gelöst haben könnten. Ferner sind zwischen Flaschenbündel (**18**) und Stickstoffabnahme noch Druckanzeige und -regler (**9**, **11**) sowie ein Überdruckventil (**10**) angeordnet. Vor dem Hochdruckpartikelfilter (**2**) wird permanent ein Teil des Produktstroms über einen Druckregler (**11**) mit Druckanzeige (**9**) und über ein weiteres Drosselventil (**12**) in eine Analyseeinheit umfassend einen Sauerstoffsensor (**19**) und einen Gasanalysator (**20**) abgezweigt. Mittels der beiden Analyseeinheiten (**19**) und (**20**) wird permanent der Restsauerstoffgehalt des Produktstickstoffs bestimmt. Die Ergebnisse der Bestimmung werden der zentralen Steuer- und Regelungseinheit (**21**) zugeführt. Die zentrale Steuer- und Regelungseinheit (**21**) steht auch in Verbindung mit verschiedenen Drucktransmittern (**1**), welche den Druck an verschiedenen Stellen des Systems abgreifen und weiterleiten. Ferner steht die Steuer- und Regelungseinheit (**21**) in Verbindung mit allen in der Anlage vorhandenen Ventilen sowie einem visuellen und/oder akustischen Alarmsignal. Die zentrale Steuer- und Regelungseinheit (**21**) überwacht sämtliche Rahmenbedingungen, die für den sicheren Betrieb der Gesamtanlage notwendig sind. Wenn eine Betriebsstörung vorliegt, wird der Hochdruckverdichter (**17**) ausgeschaltet und es wird der Alarm (**22**) geschaltet. Ohne den Fehler zu beheben, lässt sich der Hochdruckverdichter (**17**) dann nicht mehr starten.

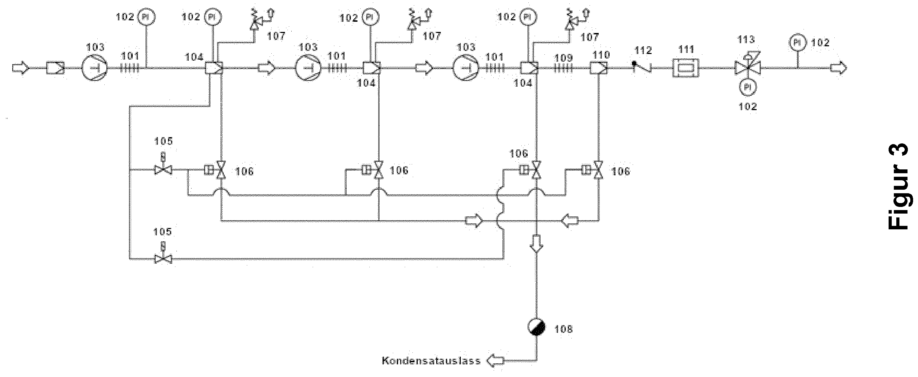

In der **Figur 3** ist ein Fließdiagramm für einen Hochdruckverdichter (**17**) dargestellt.

Man erkennt drei aufeinanderfolgende Verdichterstufen (**103**), welche zur stufenweisen Verdichtung des angesaugten Stickstoffs dienen.

Der Hochdruckverdichter (**17**) saugt den Stickstoff an der ersten Zylinderstufe (**103**) über einen vor geschalteten Filter (ohne Bezugszeichen) an und verdichtet den Stickstoff stufenweise zunächst auf 4-6 bar, sofern der Eingangsdruck nicht bereits höher lag, und dann auf 12-16 bar. Nach der ersten Zylinderstufe (**103**) durchströmt der Stickstoff eine Kühlschlange (**101**). An die Kühlschlange (**101**) schließt sich ein Filter in Form eines Zyklonabscheiders (**104**) an, welcher eine Druckanzeige (**102**) sowie ein Sicherheitsventil (**107**) umfasst, das bei einem voreingestellten Druck von etwa 20 bar entlastet.

Von der ersten Filtration (**104**) strömt der Stickstoff in eine zweite Zylinderstufe oder Verdichterstufe (**103**), wo der Stickstoff auf etwa 50 bar bis 60 bar verdichtet wird. Von der zweiten Verdichterstufe (**103**) strömt der Stickstoff wiederum durch eine Kühlschlange (**101**) in eine weitere Filtration (**104**), welche mit Druckanzeige (**102**) und Sicherheitsventil (**107**) in Verbindung steht, wobei das Sicherheitsventil (**107**) etwa so eingestellt ist, dass es ab einem Druck von 70 bar entlastet. Auch diese Filtration (**104**) ist als Zyklonabscheider ausgeführt.

Nun saugt eine dritte Verdichterstufe (**103**) den Stickstoff an und verdichtet diesen auf den gewünschten Enddruck (40-400 bar). Der Stickstoff fließt erneut durch eine Kühlschlange (**101**) und einen Zyklonabscheider (**104**), welcher mit Druckanzeige (**102**) und Überdruckventil (**107**) ausgestatte ist.

Jede der Filtrationen (**104**), die als Zyklonabscheider ausgeführt sind, ist über ein Pneumatikventil (**106**) mit einem Behälter für Kondensat (**108**) verbunden, welcher zum Auffangen des abgeschiedenen Kondensats dient.

Nach der dritten Verdichterstufe fließt der hochverdichtete Stickstoff durch einen Nachkühler (**109**) in einen Filter (**110**). Hierbei handelt es sich um einen Ölabscheider. Die Ablassleitung von diesem Abscheider (**110**) wird bei Anlaufen des Hochdruckverdichters (**17**) über ein Pneumatikventil (**106**) für die vorgewählte oder sich auf Basis der Produktanalytik über die Steuer- und Regeleinheit ergebende Zeit geöffnet. Auf diese Art und Weise wird der gesamte Hochdruckverdichter (**17**) durchgespült und ein Einbringen von Verunreinigungen vermieden.

Vom Ölabscheider (**110**) fließt der Stickstoff durch ein Rückschlagventil (**112**), welches ein Zurückströmen des Stickstoffes verhindert. Danach folgt ein zweiter Filter (**111**), der für Öldämpfe vorgesehen ist. An diese Filtration schließt sich ein Mindestdruckventil (**113**) an, was den sicheren Betrieb des zweiten Filters (1**1**1) gewährleistet. Von dort aus fließt der Stickstoff in das nicht näher dargestellte Flaschenbündel.

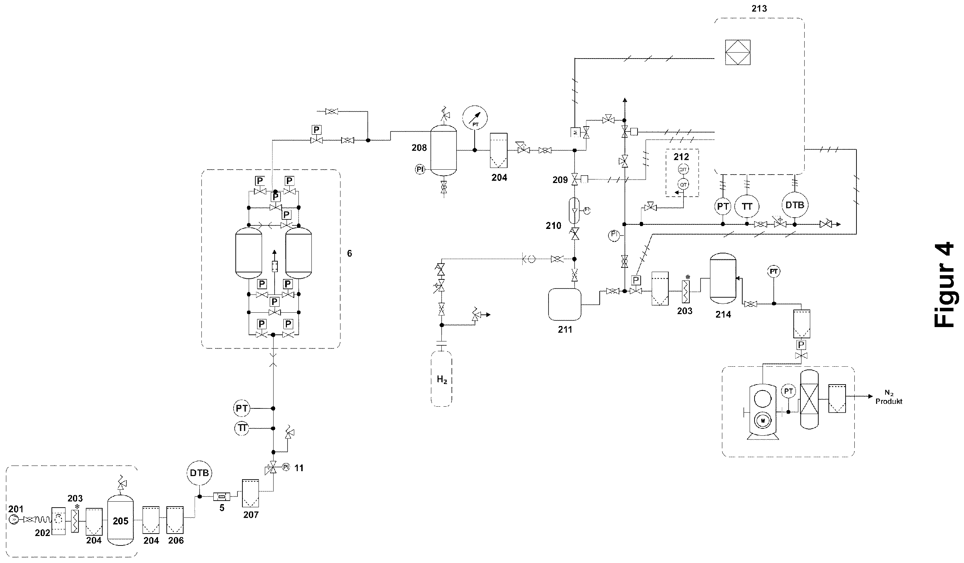

In **Figur 4** ist ein Fließdiagramm einer beispielhaften Ausgestaltungsvariante einer erfindungsgemäßen PSA(L)-Anlage abgebildet. Zur besseren Übersichtlichkeit sind nicht sämtliche Steuerleitungen und elektrischen Leitungen dargestellt.

Die in einzelnen Modulen aufgebaute Anlage kann bis auf den Hochdruckkompressor auf einer gemeinsamen Plattform mit den Maßen 2.200 mm x 2.200 mm bei einer maximale Höhe von 2.300 mm untergebracht werden. Die Plattform, auch Skid genannt, lässt sich durch die kompakte Bauweise sehr leicht mit einem Gabelstapler an den gewünschten Abnahmeort stellen und kann auch jederzeit bei Bedarf verschoben werden.

Für einen optimalen Betrieb sollte die Anlage von einer Druckluftzufuhr mit der Spezifikation ISO 8573-1:2010: 1.1.3 versorgt werden. Hierfür wird Umgebungsluft von einem Schraubenkompressor (**201**) angesaugt, verdichtet und über den Zyklonabscheider (**202**), Kältetrockner **(203)** und den Vorfilter (**204**) mit einer Porengröße von 1 µm in den Drucklufttank (**205**) gefördert. Die so vorgereinigte und verdichtete Luft durchläuft hierauf vier weitere Filter bevor sie in die Stickstoffgeneratoreinheit geführt wird.

Der erste Filter ist ein weiterer Vorfilter (**204**) zur Entfernung der gröbsten Staubpartikel, sowie Feuchtigkeit und Öl. Der zweite Filter ist ein Mikrofilter (**206**) mit einer Porengröße von 0,01 µm, der bis auf einen Restölgehalt von 0,01 mg/m³ reinigt. Am Eingang zur dritten Filtration, wird die Luft mit einem Sensor auf ihre Reinheit geprüft. Nach der Messung tritt die Luft in einen Aktivkohleadsorber (5) mit der Spezifikation eines Drucktaupunkts von +3 °C ein, der für eine weitestgehende Entfernung der Ölpartikel sorgt, welche sich noch in der Luft befinden. Bei der Adsorption an der Aktivkohle werden jedoch erneut Staubpartikel in die Luft abgegeben. Diese werden schließlich in dem vierten Filter, einem Aktivkohlefilter (**207**) mit einer Porengröße von 0,01 µm, wieder entfernt. Eine weitere Funktion dieses Filters ist es, noch verbliebene Feuchtigkeit und Restöl aus der Luft abzutrennen. Nach Austritt aus dem Aktivkohlefilter (**207**) wird die spezifikationsgemäß gereinigte Luft über einen Druckregler (**11**) mit einem Ausgangsdruck von 7 bar in den Stickstoffgenerator (**6**) eingespeist.

Der Stickstoffgenerator (**6**) arbeitet, wie oben beschrieben, mit einem Druckwechsel-Adsorptionsverfahren, bei dem mit Hilfe eines Adsorptionsgranulats der Stickstoff vom Sauerstoff getrennt wird. Erfindungsgemäß wird dies so lange betrieben, bis sich im Behälter des Stickstoffgenerators (**6**) nur noch Stickstoff mit einem Rest-Sauerstoffanteil von 1.000 ppm, entsprechend einer Reinheit von 3.0, also einem Stickstoff-Anteil von 99,9 %, befindet. Der hierbei abgetrennte Sauerstoff wird bei diesem Vorgang direkt an die Umgebung abgegeben.

Dieser, sowie jeder andere Vorgang, welcher an der Anlage durchgeführt wird, lässt sich auf der Frontseite der Plattform an einem Terminal (nicht in der Zeichnung dargestellt) einsehen. Das Terminal ist mit einem Display ausgestattet, welches alle Sensoren der Anlage abbildet und ihre Messungen in Echtzeit wiedergibt. Von hier aus lässt sich auch die ganze Anlage steuern.

Nach Erreichen der vorgesehenen Reinheit von 3.0 wird der Stickstoff in einem Stickstoffspeicherbehälter (**208**) in der Mitte der Plattform gesammelt. Hier wird er zwischengespeichert, bis der Stickstoffspeicherbehälter (**208**) mit 5 bar Maximaldruck gefüllt ist. Ist der Druck erreicht, wird der Stickstoff über einen Staubfilter in Form des Vorfilters (**204**) und einen auf 5 bar eingestellten Druckregler in das Nkat-Modul eingeleitet.

Im Nkat-Modul durchläuft der Stickstoffstrom zunächst ein mit einem Messsensor ausgestattetes Magnetventil (**209**), welches die Reinheit des Stickstoffes prüft und nur bei Einhaltung der Anforderung von 99,9 %-iger Reinheit den Stickstoff passieren lässt. Sollte die Reinheit nicht erreicht werden, schließt das Magnetventil (**209**) und lässt den unreinen Stickstoff über eine zweite Leitung, welche im Falle einer Verunreinigung geöffnet wird, in die Umgebung ab. Entspricht der Stickstoff den Anforderungen, wird er von dem Magnetventil (**209**) durch einen Durchflussregler (**210**) in den Katalysereaktor (**211**) geführt. In dem hier gezeigten Beispiel besteht der Katalysereaktor (**211**) aus einem Reaktor, der mit einem Granulat aus mit Palladium versehenem Aluminiumoxid gefüllt ist.

In die Stickstoffleitung vom Durchflussregler (**210**) zum Katalysereaktor (**211**) wird proportional zur am Durchflussregler (**210**) eingestellten Durchflussmenge Wasserstoff eindosiert. Dies wird über einen parallel geschalteten Proportionsregler gesteuert, welcher im vorliegenden Beispiel 2 Liter Wasserstoff pro Kubikmeter Stickstoff mit in den Katalysereaktor (**211**) fließen lässt.

Das Palladium-Aluminiumoxid-Granulat im Katalysereaktor (**211**) sorgt für eine katalytische Umsetzung des Sauerstoffs mit dem zugefügten Wasserstoff und adsorbiert so den noch im Stickstoff enthaltenen Sauerstoff bzw. das durch die Reaktion entstandene Wasser. Durch dieses System schafft der Katalysereaktor (**211**) es, bis auf 1 ppm Restsauerstoff allen Sauerstoff aus dem Stickstoff zu filtern und am Reaktorausgang eine Stickstoffreinheit von 99,9999 % zu erreichen. Dies entspricht Stickstoff mit der Reinheit 6.0.

Die Adsorption des Sauerstoffs im Katalysereaktor (**211**) wird über eine Sauerstoff-Sensorik (**212**) am Ausgang des Katalysereaktors (**211**) gemessen. Sollte die angestrebte Reinheit im Katalysereaktor (**211**) nicht erreicht werden, wird das Gas über den gleichen Spülausgang, wie am Stickstoffeingang des NKat-Moduls so lange in die Atmosphäre abgeführt, bis im Katalysereaktor (**211**) wieder die vorgegebene Reinheit von 6.0 erreicht wird. Dieser ganze Prozess wird über einen integrierten Schaltschrank (**213**) im Nkat-Modul oder in einem zentralen Schaltschrank gesteuert und ist an der Steuerung der Anlage jederzeit auf dem Bildschirm möglich zu verfolgen. Bei dem Erreichen der nötigen Stickstoffqualität, stellt sich die Spülung ab und die Sensoren am Stickstoffausgang geben diesen frei.

Da im Prozess der Sauerstoffadsorption im Katalysereaktor (**211**) Wasserstoff mit dem Palladium-Aluminiumoxid-Granulat katalytisch mit dem Sauerstoff zu Wasser umgesetzt wird, reichert sich wieder Feuchtigkeit im Gasstrom an. Diese Feuchtigkeit muss im folgenden Verlauf wieder hinausgefiltert werden. Hierfür wird der Stickstoff mit einer Reinheit von 99,9999 % und einem Druck von 5 bar aus dem Nkat-Modul über einen weiteren Filter und einen Kältetrockner (**203**) in einen Druckbehälter (**214**) geleitet.

Aus dem Druckbehälter (**214**) wird der aufbereitete Stickstoff dann über einen Hockdrucktrockner, welcher den Drucktaupunkt auf +7 °C bis +10 °C senkt, in einen Hochdruckverdichter gleitet und auf 300 bar verdichtet. Alternativ zur dargestellten Variante kann hier auch als Ersatz ein Adsorptionstrockner zum Einsatz kommen, um einen tieferen Taupunkt zu erreichen, beispielsweise von weniger als -45 °C. Vorzugsweise erfolgt dann ein Abfüllen des Stickstoffs in ein Druckflaschen-Bündel mit zwölf Flaschen mit einer Kapazität von 50 I pro Flasche.

Weitere Ausführungsformen und Vorteile der Erfindung ergeben sich aus den nachfolgenden Patentansprüchen.

**Bezugszeichenliste**

| | | | |
|---|---|---|---|
| **I** | Schutzfiltration | **12** | Drosselventil |
| **II** | Stickstofferzeuger | **13** | Durchflussmesser |
| **III** | Stickstoffprodukt-Speicher | **14** | Vorratsspeicher |
| **IV** | Stickstoffvorratsspeicher für Hoch-druckverdichter | **15** | Magnetventil |
| | | **16** | Rückschlag- Unterdruckventil |
| **V** | Hochdruckverdichter | **17** | Hochdruckverdichter |
| **VI** | Flaschenbündel | **18** | Flaschenbündel |
| **VII** | Schutzfiltration | **19** | Sauerstoffsensor |
| | | **20** | Gasanalyse |
| **1** | Drucktransmitter | **21** | Steuereinheit |
| **2** | Filter | **22** | Alarmlampe mit Horn |
| **3** | Kugelhahn | **101** | Zwischenkühler |
| **4** | elektrischer Kondensatableiter | **102** | Druckanzeige |
| **5** | Aktivkohleadsorber | **103** | Verdichterstufe |
| **6** | Stickstoffgenerator | **104** | Filter |
| **7** | Speicherbehälter | **105** | Magnetventil |
| **8** | 3-Wege-Kugelhahn | **106** | Pneumatikventil |
| **9** | Druckanzeige | **107** | Sicherheitsventil |
| **10** | Sicherheitsventil | **108** | Behälter für Kondensat |
| **11** | Druckregler | **109** | Nachkühler |
| **110** | Partikelfilter | **206** | Mikrofilter |
| **111** | Aktivkohlefilter | **207** | Aktivkohlefilter |
| **112** | Rückschlagventile | **208** | Stickstoffspeicherbehälter |
| **113** | Mindestdruckventil | **209** | Magnetventil |
| **201** | Schraubenkompressor | **210** | Durchflussregler |
| **202** | Zyklonabscheider | **211** | Katalysereaktor |
| **203** | Kältetrockner | **212** | Sauerstoff-Sensorik |
| **204** | Vorfilter | **213** | Schaltschrank |
| **205** | Drucklufttank | **214** | Druckbehälter |

## Patentansprüche

1. Verfahren zur Herstellung von verdichtetem reinen Stickstoff mittels eines Stickstoffgenerators, bei welchem man
a) mittels PSA-Technologie Stickstoff aus Druckluft erzeugt;
b) den in a) erzeugten Stickstoff mittels eines Verdichtungsmittels umfassend einen Nach- oder Hochdruckverdichter auf einen Druck im Bereich von größer 10 bar bis etwa 400 bar verdichtet; und
c) den gemäß b) verdichteten Stickstoff speichert,
**dadurch gekennzeichnet, dass** man
in einem Schritt a1) dem Stickstoffgenerator Druckluft unter Einhaltung eines Luftfaktors im Bereich von 2 bis 4 zuführt und den dadurch mit einer Reinheit im Bereich von 2.5 bis 3.5 erzeugten Stickstoff in einem Schritt a2) einer katalytischen Reduktion mit Wasserstoff unterwirft.

2. Verfahren nach Anspruch 1, **dadurch gekennzeichnet, dass** man die Druckluft vor dem Einlass des Stickstoffgenerators in einem Schritt a0) einer Kaskade von vier oder mehr Filtervorgängen unterwirft.

3. Verfahren nach Anspruch 2, **dadurch gekennzeichnet, dass** man die Druckluft vor dem Einlass in den Stickstoffgenerator zunächst mit einem Partikelfilter zur Entfernung von groben Partikeln, Öl und Feuchtigkeit; dann mit einem Aktivkohlefilter zur Entfernung von restlichem Öl; dann mit einem Partikelfilter zur Entfernung von Feinstpartikel, weiterem Restöl und weiterer Restfeuchtigkeit; und schließlich mit einem Feinst-Staubfilter; in der angegebenen Reihenfolge behandelt.

4. Verfahren nach einem der vorhergehenden Ansprüche, **dadurch gekennzeichnet, dass** man den Stickstoffstrom vor dem Schritt c) und nach dem Schritt a2) in einem Schritt a3) einer Trocknungs- und/oder Reinigungsbehandlung unterzieht.

5. Verfahren nach Anspruch 4, **dadurch gekennzeichnet, dass** man den Stickstoffstrom im Schritt a3) mit Hilfe einer Kältebehandlung vortrocknet, dann den vorgetrockneten Stickstoffstrom im Druckwechselverfahren auf einen Taupunkt von etwa -40 °C bringt und dabei von Restwasserstoff sowie Feuchtigkeit trennt.

6. Verfahren nach einem der vorhergehenden Ansprüche, **dadurch gekennzeichnet, dass** der Stickstoffgenerator über eine zentrale Steuerungseinheit gesteuert wird, die mit einem Gebäudeleitsystem verbunden ist mittels derer sie angesteuert werden kann und einen Stromüberschuss einer vorhandenen Photovoltaik-Anlage erfassen kann, und Steuerungseinheit die Stickstofferzeugung in Abhängigkeit vom Vorhandensein eines Stromüberschuss steuert.

7. Verwendung des nach einem der vorhergehenden Ansprüche erzeugten Stickstoffs mit einem maximalen Restsauerstoffgehalt von 1 ppm als Schutzgas in der Lebensmittel- oder Pharmaindustrie.

8. Verwendung des nach einem der vorhergehenden Ansprüche 1 bis 5 erzeugten Stickstoffs mit einem maximalen Restsauerstoffgehalt von 1 ppm als Schutzgas für das Laserschneiden.
